Europäisches Patentamt

European Patent Office

Office européen des brevets

(11) Publication number: **0 087 401**

**A1**

## (12) EUROPEAN PATENT APPLICATION

(21) Application number: **83850026.2**

(22) Date of filing: **03.02.83**

(51) Int. Cl.³: **F 16 L 27/04**

(30) Priority: **03.02.82 SE 8200615**

(43) Date of publication of application:
**31.08.83 Bulletin 83/35**

(84) Designated Contracting States:
**AT BE CH DE FR GB IT LI NL**

(71) Applicant: **Wiklund, Thore
Ringgatan 16
S-941 34 Pitea(SE)**

(72) Inventor: **Wiklund, Thore
Ringgatan 16
S-941 34 Pitea(SE)**

(74) Representative: **Onn, Thorsten et al,
AB Stockholms Patentbyra Zacco & Bruhn P.O. Box 3129
S-103 62 Stockholm(SE)**

(54) Connecting link for gaseous or liquid media.

(57) A connecting link intended for transferring gaseous, powderous or liquid medium, even under pressure, between two connecting points movable relative to each other. The connecting link is of the type comprising a tubular member with connecting pieces (2,3) located at its ends for connecting the link to said points, and at least one ball joint (22) located in connection to one of the connecting pieces (2,3) and comprising a ball (23) supported in a seat, which ball (23) includes a through channel (27,42,43). This ball (23) is sealed in its seat by two parallel and spaced sealing arrangements (28) on both sides of one end of the through channel (27,42,43) of the ball, (23) which channel extends angularly through the same, and is exposed to the same pressure on its surfaces located between the sealing arrangements, whereby the ball (23) is maintained balanced in its seat irrespective of the pressure prevailing in the link.

FIG.9

Connecting link for gaseous or liquid media

This invention relates to a connecting link for the transfer of gaseous or liquid medium, for example air, hydraulic liquid, liquid fuel etc., between two connecting points, which are movable relative to each other, for example for the transfer of a medium from a supply source to a consumer movable relative thereto.

For the transport, for example, of hydraulic liquid to a hydraulic cylinder, which is movably attached, it is necessary with known art to use flexible pressure hoses, which can adjust to the movement and different positions of the cylinder. It was found, however, that pressure hoses of types commercially available, and especially pressure hoses intended for high pressures, have the tendency, particularly at low temperatures, to burst or break and thereby cause shutdowns and other damages more or less extensive. Such hose breaks also have been deemed to be so serious, that hose-failure valves are used which release as soon as a hose break occurs and thereby cut off the connection in order to prevent discharge of hydraulic liquid. These hose-failure valves, however, do not prevent hose breaks, but only reduce the damages involved with a hose break. Hose breaks are a great problem and, therefore, there is a great demand of rendering available a connecting or transfer member, which is much more reliable than the hose.

A hose, moreover, also implies the limitation that it does not withstand the same high pressures as other components in pressure medium conduits when the hose has great dimensions.

As an alternative to the hose as a connecting link, a so-called transport link, for example, is known through DE-OS 1 811 156 and 1 910 988. It consists of a tubular body of metal, which at each end is formed with a ball joint permitting a certain limited movement.
Each ball joint comprises a ball, which is supported in a
partially spherical seat in the body and connected to a
connecting piece, and which includes a diametrical through
channel between the interior of the body and the connecting piece and a surface facing to the interior of the
body, which surface at prevailing pressure is exposed
to this pressure and thereby to a force, which tends to
press the ball into its seat, which results in deteriorated mobility, and which at high pressures locks the
joint. This known transport link, therefore, cannot be
used at applications where high pressures are used.
The present invention, therefore, has the object to
provide such a transport link, which does not show the
aforesaid disadvantages, but renders possible the transfer of a medium even under high pressure, and which,
besides, permits a substantially higher mobility than
conventional transport links.
This object is achieved in that the connecting link
according to the present invention has been given the
characterizing features defined in the attached claims.

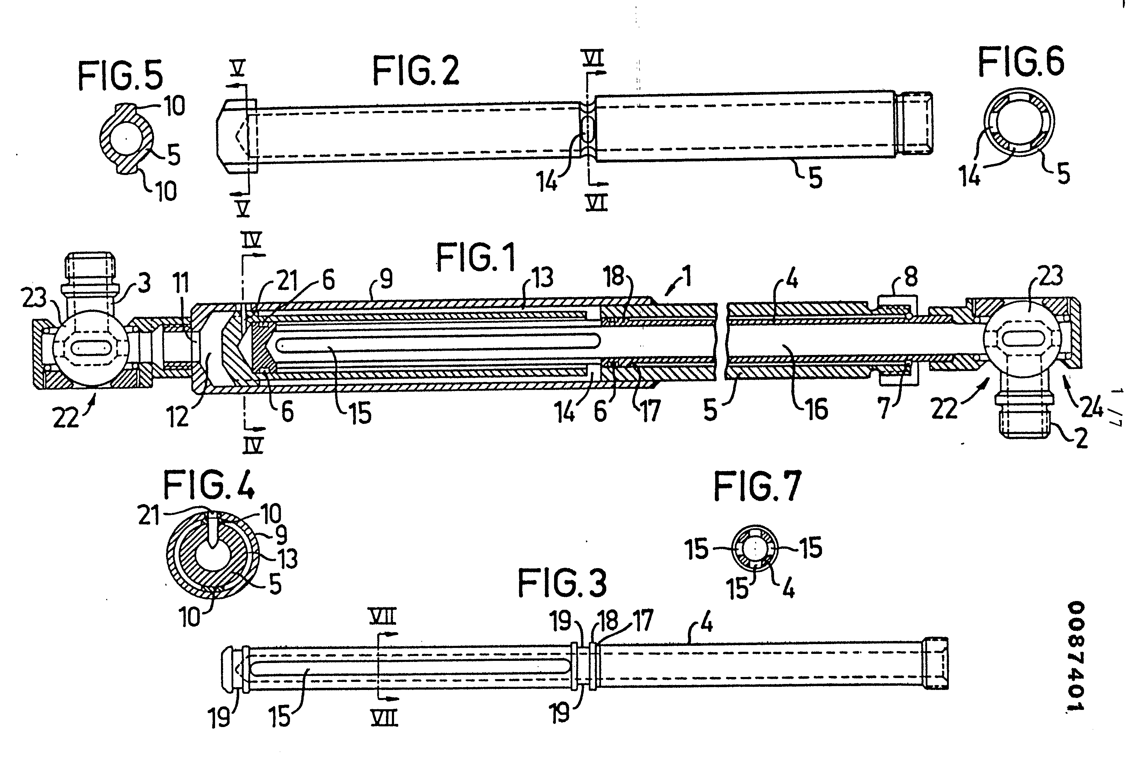

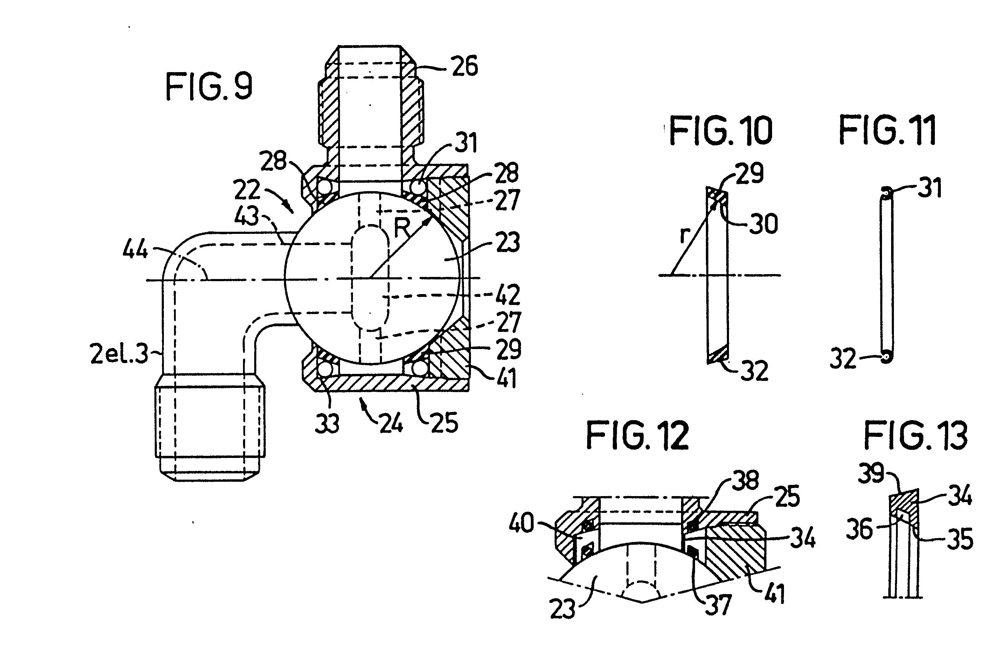

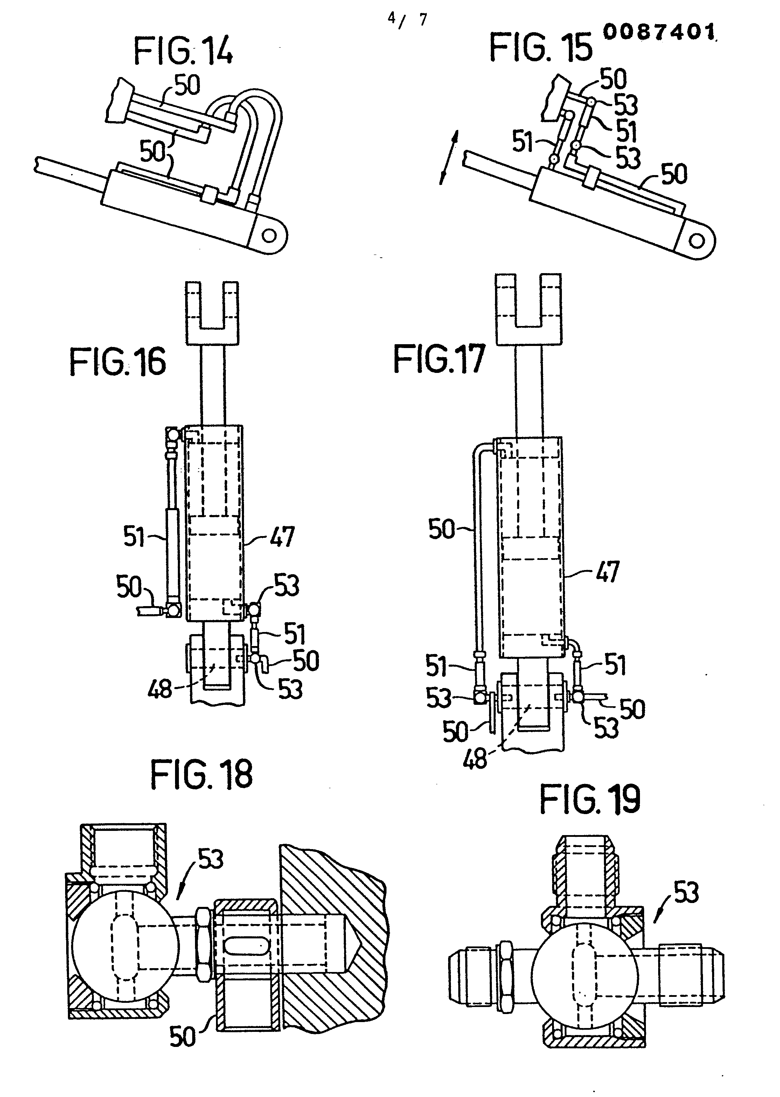

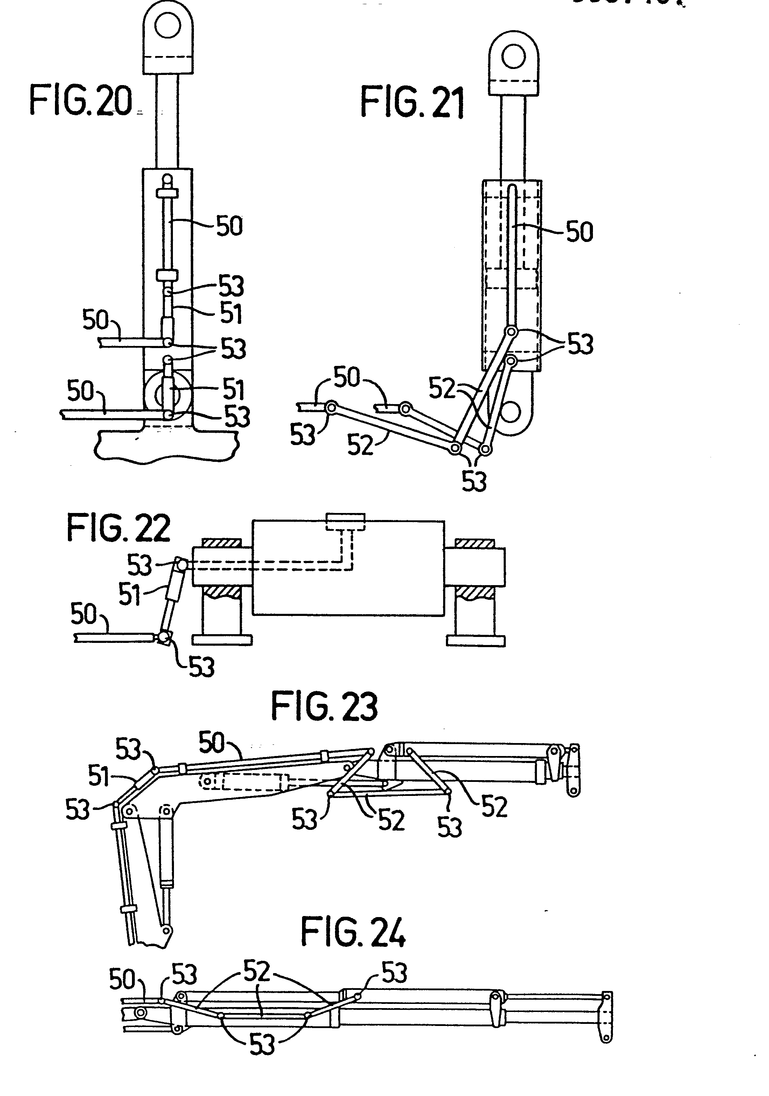

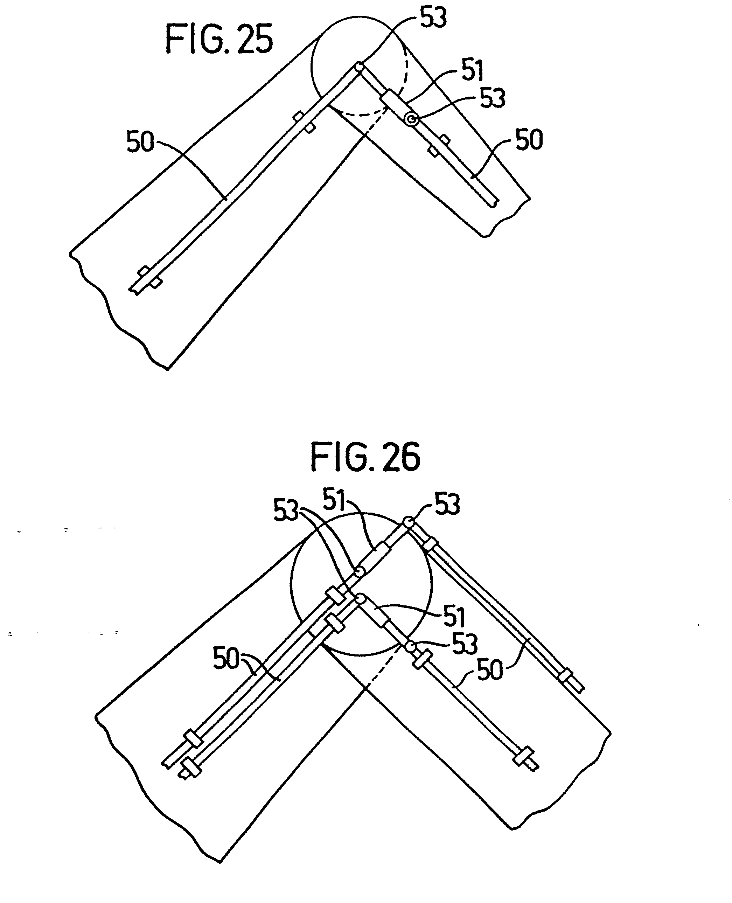

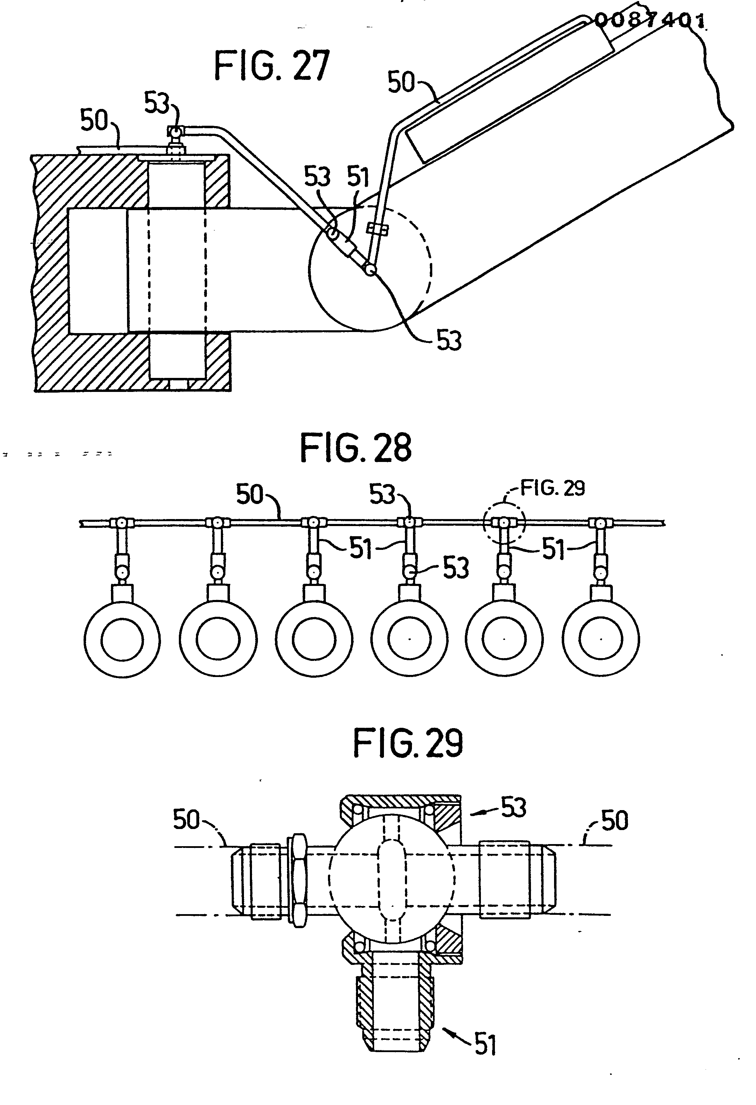

The invention is described in greater detail in the
following, with reference to the accompanying drawings,
in which Fig. 1 is a section through a connecting link
according to the invention of a telescpic design,
Figs. 2 and 3 are lateral views each of a tubular
slide comprised in the telescopic link according to
Fig. 1, Fig. 4 is a section along the line IV-IV in
Fig. 1, Fig. 5 is a section along the line V-V in Fig.
2, Fig. 6 is a section along the line VI-VI in Fig. 3,
Fig. 7 is a section along the line VII-VII in Fig. 3,
Fig. 8 is a section through a connecting link according
to the invention of a non-telescopic design, Fig. 9
is a section through a joint comprised in the connecting link, Figs. 10 and 11 are sections of an inner and,
respectively, outer sealing member at one embodiment of the sealing of the joint, Fig. 12 is a partial section
through a ball joint according to the invention at an
alternative design of the sealing, Fig. 13 is a section
of an inner sealing member of the sealing according to
Fig. 12, Figs. 14 and 15 show schematically a cylinder
mounting with hose according to the state of art and,
respectively, with connecting links according to the
invention, Figs. 16 and 17 show schematically two further
cylinder mountings with connecting links according to
the invention, Fig. 18 shows on an enlarged scale and
by way of section a detail of the left-hand connecting
link in Fig. 17, Fig. 19 shows on an enlarged scale and
by way of section a detail of the attachment of the
right-hand connecting link in Fig. 17, Figs. 20 and 21
show schematically two further cylinder mountings with
connecting links according to the invention, Fig. 22
shows schematically a mounting of a connecting link
according to the invention for transferring a medium
to or from a rotating consumer, Figs. 23 and 24 show
schematically a mounting of connecting links at a crane
with telescopic extension jib for transferring hydraulic
medium to the telescope cylinder in retracted and respectively, extended position, Figs. 25 and 26 show schematically a single and, respectively, a double conduit
mounting at a toggle joint with connecting links according to the invention, Fig. 27 shows schematically a
hydraulic conduit mounting with connecting links according to the invention for a jib pivotal about perpendicular axles, for example an excavator jib, Fig. 28 shows
schematically mn arrangement with connecting links according to the invention for transferring a medium to a
plurality of consumers movable relative to each other,
for example marine engines,and Fig. 29 shows by way of
section and on an enlarged scale a ball joint designed
as connecting piece and comprised in a telescopic connecting link.

The connecting link according to this invention comprises at the embodiments shown in Figs. 1-8 a tubular member 1 with a through channel and with sleeve-shaped or tubular connecting pieces 2 and 3 at the ends for connecting the connecting link to members, between which a gaseous, pulverous or liquid medium is to be transferred through the link, and which can be movable relative to each other.

At the embodiment shown in Figs. 1-7 the link is telescopic, i.e. the distance between the connecting pieces 2 and 3 is variable. The tubular member 1 consists of two hollow slides 4 and 5, which are movable relative to each other and are closed at one end, and of which the slide 4 is located movably within the second outer slide 5 and sealed against the same by sealings 6 and 7. The lastmentioned sealing 7 is retained in place by a socket 8, which is screwn detachably on the open end of the outer slide.

The outer slide 5 is enclosed at least along part of its length by a sleeve 9, which is rigidly connected to the outer slide 5, and against which the slide 5 rests with a number of radially projecting shoulders 10 located at the closed end of the outer slide, which end faces toward the end of the sleeve, which end communicates through an opening 11 with the connecting piece 3. Between the ends of the outer slide and sleeve a space 12 is formed, which communicates with the connecting piece 3 and with an axial space 13, which is formed between the outer slide 5 and its sleeve 9, and which via a plurality of radial openings 14 in the outer slide 5 and a plurality of axial slits or grooves 15 in the inner slide 4 communicates with the axial cavity 16 of the inner slide, which cavity communicates with the connecting piece 2.

Said slits 15 in the inner slide 4 have a length, which corresponds at least to the maximum stroke or movement length of the telescopic extension member, so that the slits always communicate with the openings 14 in the outer slide 5, irrespective of the position occupied by the two slides 4 and 5. In Fig. 1 the slides are shown in entirely retracted position, in which the inner slide 4 with its closed end abuts the closed end of the outer slide, and the other end position of the slides is determined by the sealing 7, which also acts as a stop member, for example a split steel ring, and an inclined front surface 17 of a greater portion 18 formed on the inner slide 4, which portion is provided with an overall groove 19 receiving the sealing 6. A corresponding groove is located about the closed end of the inner slide for the second sealing 6, and between these sealings 6 also extend the slits 15 of the inner slide.

The inner slide, as already mentioned, is formed with a closed end, which faces toward the closed end of the outer slide. It is hereby achieved that the volume in the connecting link between its connecting pieces 2 and 3 does not change, but remains the same even at relative movement between the two slides 4 and 5. For moving the slides relative to each other, a force is required which is only slightly greater than the friction forces produced by the sealings 6 and 7. This applies also when a medium under high pressure flows through or is in the connecting link, because the forces caused by the pressure of the medium on the slides 4 and 5 balance each other. In order at the movement between the slides 4 and 5 of the connecting link to prevent underpressure and, respectively, overpressure to arise in the space 20 between the ends of the slides facing toward each other, said space is connected to the atmosphere through an air channel 21, which extends through one of the radial shoulders 10, as shown in Figs. 1 and 4.

The connecting link according to the invention further comprises at meast one ball joint, which is located between a connecting piece 2,3 and the tubular member 1. At one embodiment of the present connecting link the tubul-
r member can be a connecting piece, an example whereof
is shown in Fig. 9.

At the embodiments according to Figs. 1-8 the link is provided with two ball joints 22 located in direct connection
one to each of the connecting pieces 2 and 3 of the link.
These connecting pieces 2 and 3, more precisely, are
jointed or designed integrally with a ball 23 comprised
in respective ball joints 22, which ball is pivotally
supported in a partially spherical seat in a ball joint
holder 24. Such a ball joint holder 24 carries at its ends
remote from each other both the inner slide 4 and the
outer slide 5. As each ball joint 22 is identical with
the other, only one will be described in greater detail
with reference to Figs. 9-13.

Each ball joint holder 24 comprises a hollow bearing portion 25, in which the ball 23 has its seat, and an attachment portion 26 of sleeve or tube shape and with internal
or external thread for detachable connection.of the
holder 24 to a slide 4 or 5. Said attachment portion 26
as indicated above can be the tubular member 1 of the
connecting link and, thus, one of its connecting pieces.
Each ball joint holder 24 communicates through its attachment portion 26 with the slide 4,5, to which it is
attached, and its ball 23 is supported in the bearing
portion 25. Within this portion the ball 23 is sealed
by means of two sealing means 28, which form the seat
proper for the ball 23 and which are located on both
sides of openings 27a  formed in the ball 23 diametrically and in one plane  in the periphery of the ball which
have the same size.

Each such sealing means 28 comprise an inner annular
sealing member 29 (Fig. 10) of bearing metal or bearing
plastic, and include an inner seat or bearing surface
30 abutting the ball 23, the radius r of which surface
shall be equal to or slightly smaller than the radius R
of the ball, depending on the material of which the member 29 consists, and an outer annular sealing member 31 (Fig. 11). Said member 31 can consist of a solid resilient material, for example rubber, or may have a cylindric cross-section with an overall inward facing lateral gap 32, which permits pressure occurring between the sealing means 28 to act on, i.e. widen, the outer sealing member 31, which thereby applies pressure on the inner sealing member 29 in response to the pressure prevailing in the medium being in the link or flowing therethrough. The outer sealing member 31 is located between surfaces 32 and 33 of the inner sealing member 29 and, respectively, the bearing portion 25 of the holder, which surfaces form between themselves a gap tapering linear inward. At certain embodiments, alternatively, only the outer sealing member 31 in each of the said forms can be used as sealing means for obtaining necessary sealing against and intended seat surfaces for the ball 23.

In Figs. 12 and 13 an alternative sealing arrangement is shown, which comprises a bearing ring 34 of bearing metal with a curved seat surface 35 abutting the ball 23, a sealing ring 37 of rubber or similar material located in a groove 36 in said seat surface, and a sealing ring 38 sealing outwardly against the bearing ring 34, which sealing ring is located in a groove in the bearing portion 25 of the ball joint holder. Each bearing ring 34 has its outer surface 39 shaped conically and abuts by the same a conic surface 40 in the ball joint holder, 24, so that the static contact pressure of the bearing rings against the ball 23 can be controlled. For this control, the ball joint holder comprises a tightening nut 41, which can be screwn into the holder 24 for fixing the ball 17and for manually adjusting the sealing arrangements against the ball 23 and thereby the static sealing pressure.

At the occurrence of pressure medium under pressure in the through channel of the connecting link, the prevailing pressure acts about the ball on the surface portions located between the sealing arrangements 28, owing to the radial diametric channels 27 in the ball 23 which meet in a cavity 42 in the ball 23, which cavity communicates with the associated connecting piece 2 or 3 through a channel 43. The forces originating from the prevailing pressure and acting on the ball 23, thus, balance each other, whereby no forces originating from the pressure stop the movement of the ball in its seat. On the ball 23, thus, act only the more or less static sealing pressures of the sealing arrangements, which pressures are adjustable by said nut 41. In the surface 30 of the inner sealing member abutting the ball 23 preferably a number of small lubricant pockets are formed which supply the joint with necessary lubricant, for example oil, in the form of a film.

According to the principles, on which the present invention is based, the connection 27,42,43 extends through each ball 23 angularly outward from the connecting link and, thus, a great movement range is obtained. The link can be rotated unrestrictedly about one axle 44 (see Fig. 9) of its joint, and it can simultaneously be rotated through about 45° in relation to the centre of the ball, seen in the plane of the drawing.

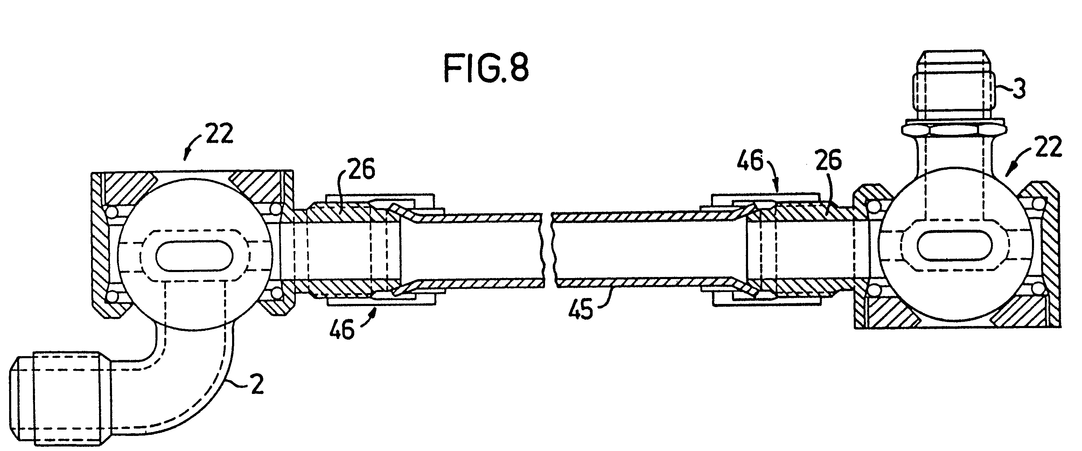

In Fig. 8 an embodiment of the present connecting link is shown, which cannot be extended, but comprises one single tubular piece 45 between the ball joints 22 and the connecting pieces 2 and 3.This tubular piece 45 is sealingly connected by per se known couplings 46 to the attachment portion 26 of the ball joints. In the lastmentioned Figure also is shown, that the connecting pieces 2,3 can have varying shapes, and owing to the ball joints 23 several connecting links according to
the invention can be jointed to a chain of links (see,
for example Figs. 23 and 24), which also can be folded
together like a folding rule.

In the Figures 14-29 some applications fields for the
present connecting link are shown by way of example. In
these Figures 50 designates a stationary pipe line,
51 designates a telescopic link according to the invention, 52 designates a rigid, i.e. not extendible link
according to the invention, and 53 designates a ball
joint according to the invention.

In Figs. 14 and 15 the difference between a cylinder
mounting with hose according to known art and with
telescopic connecting links 51 according to the invention
is illustrated.

In Figs. 16-19 the arrangement of telescopic connecting
links 51 according to the invention for the transfer
of hydraulic oil to hydraulic cylinders 47 is shown,
which cylinders are pivotal about an axle 48. Figs. 18
and 19 show different examples of the attachment of the
ball 23 proper. The ball comprised in a telescopic
link 51 preferably should be attached as close as possible to the centre of movement in order to reduce the
length of the link to minimum.

As the Figures 16-19 speak for themselves in other
respects, no further comments on them are required.

The present invention is not restricted to what is set
forth above and shown in the drawings, but can be altered, modified and completed in many different ways within
the scope of the invention idea defined in the attached
claims.

Claims

1.    A connecting link for transferring a gaseous, powderous or liquid medium, even under pressure, between two connecting points movable relative to one another, comprising a tubular member with connecting pieces located at its ends for connecting said connecting link to said connecting points, and at least one ball joint located in connection to one of said connecting pieces and comprising a ball with through channel supported in a seat,

c h a r a c t e r i z e d   i n   that the ball in its seat is sealed by two parallel and spaced sealing arrangements on both sides of one end of the channel extending through the ball, which channel  extends angularly therethrough, and that the ball is exposed to the same pressure on its surfaces located between the sealing arrangements whereby the ball is maintained balanced  in its seat irrespective of the pressure prevailing in the link.

2.    A link as defined in claim 1, c h a r a c t e r - i z e d   i n   that the ball is provided with radial, diametrically extending channels located in one plane, one end of whibh channels is located between the sealing arrangements, and which channels meet in a cavity located in the ball, which cavity communicates with the associated connecting piece through a channel located angularly in relation to said plane.

3.    A link as defined in claim 1 or 2, c h a r a c t - e r i z e d   i n   that each sealing arrangement has one curved surface abutting the ball, and the surfaces of these sealing arrangements together constitute the seat surfaces of the ball.

4.    A link as defined in claim 3, c h a r a c t e r - i z e d   i n   that said curved surface is formed on an inner sealing member of bearing metal or bearing plastic in each of the sealing arrangements, and that
the inner sealing members thereof are adjusted to the
ball by means of a tightening nut.

5.   A link as defined in claim 4, c h a r a c t e r -
i z e d   i n   that the inner sealing member in each
sealing arrangement is held pressed against the ball
by an outer sealing member, which can consist of a solid
O-ring or an elastic ring with cylindric cross-section
and an overall gap on its side facing to the other
sealing member for being exposed internally to a pressure acting between the sealing arrangements and on the
ball, and that the outer sealing member is located in
a space tapering wedge-shaped inward, i.e. to the other
sealing member.

6.   A link as defined in any one of the preceding claims,
c h a r a c t e r i z e d   i n   that the tubular member
connected to the ball joint consists of two telescopic
tubular slides, an outer slide and an inner slide, which
irrespective of relative movement have a through channel
with unchanging volume.

7.   A link as defined in claim 6, c h a r a c t e r -
i z e d   i n   that both the outer slide and the inner
slide are closed at one end, that the closed end of the
inner slide faces to the closed end of the outer slide,
which from its closed end is enclosed a portion of its
length by a sleeve-shaped member for forming an axial
space therebetween, which communicates with one of the
connecting pieces directly or via a ball joint, and with
the longitudinal cavity of the inner slide via openings
in the outer slide and longitudinal slits in the inner
slides, which extend from the closed end of the inner
slide and have a length corresponding at least to the
maximum length of movement between the slides.

8.   A link as defined in claim 7, c h a r a c t e r -
i z e d   i n   that between the closed ends of the two
slides facing to each other a space is located which in
response to the relative movement of the slides varies
and communicates via a channel with the atmosphere.

9.   A link as defined in claim 7 or 8, c h a r a c t -
e r i z e d   i n   that the inner slide is sealed against
the outer slide by two sealings, between which the slits
of the inner slides are located.

10.   A link as defined in any of the preceding claims,
c h a r a c t e r i z e d   i n   that each ball joint
is designed so as to permit the link to turn or rotate
about the channel axle extending angularly relative to
the radial channels of the ball, which rotation is unrestricted and at least through $30^{\circ}$ to and from said
axle, whereby several links each comprising a connecting piece curved through $90^{\circ}$ can be connected to a link
chain, which can be folded together like a folding rule.

FIG.5

FIG.2

FIG.6

FIG.1

FIG.4

FIG.7

FIG.3

0087401

FIG.8

FIG.9

FIG.10    FIG.11

FIG.12    FIG.13

0087401.

0087401

**FIG. 14**

**FIG. 15**

**FIG. 16**

**FIG. 17**

**FIG. 18**

**FIG. 19**

FIG.20

FIG.21

FIG.22

FIG.23

FIG.24

0087401

FIG.25

FIG.26

0087401

# FIG. 27

# FIG. 28

# FIG. 29

0087401

European Patent Office

EUROPEAN SEARCH REPORT

Application number

EP 83 85 0026

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-2 377 196 (WALLEY)<br>* Figures 1, 2 * | 1-5,10 | F 16 L 27/04 |
| A | US-A-2 328 898 (GOFF et al.)<br>* Figure 1 * | 1-5,10 | |
| A | GB-A-1 401 005 (AVICA EQUIPMENT)<br>* Figure 1 * | 1-4,10 | |
| A | US-A-2 985 467 (CABLE et al.)<br>* Figure 1 * | 1,2,6 | |
| A | DE-B-1 625 254 (AVIONS MARCEL DASSAULT-BREGUET AVIATION) | | |
| D,A | DE-A-1 910 988 (HIGH TEMPERATURE ENGINEERS) | | TECHNICAL FIELDS SEARCHED (Int. Cl. 3)<br><br>F 16 L 27/00 |
| D,A | DE-A-1 811 156 (TECHNO-CHEMIE) | | |

The present search report has been drawn up for all claims

| Place of search | Date of completion of the search | Examiner |
|---|---|---|
| BERLIN | 21-04-1983 | SCHLABBACH M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82